# EUROPEAN PATENT SPECIFICATION

(11) **EP 2 024 397 B1**
(45) Date of publication and mention of the grant of the patent: **08.06.2016**
(21) Application number: 07775308.5
(22) Date of filing: 12.04.2007
(51) Int. Cl.: C08B 1/00, C08J 3/12, C08B 3/00, C08B 5/00, C08B 7/00, C08B 9/00, C08B 11/00, C08B 13/00, C08B 15/00

(54) **USE OF SPECIAL SCREENS IN THE PREPARATION OF CELLULOSE POWDER**
VERWENDUNG VON BESONDEREN SIEBEN ZUR HERSTELLUNG VON CELLULOSEPULVER
UTILISATION DE TAMIS PARTICULIERS DANS LA PRÉPARATION DE POUDRE DE CELLULOSE

(30) Priority: 18.05.2006 US 801558 P
(43) Date of publication of application: 18.02.2009
(73) Proprietor: Dow Global Technologies LLC, Midland, MI 48674 (US)
(72) Inventor: BEER, Wolfgang, Freeland, MI 48623 (US); SCHNEIDER, Hans-peter, 21680 Stade (DE); MERZ, Gunnar R., 21683 Stade (DE); KRUSE, Peter, 21683 Stade (DE)
(74) Representative: f & e patent
(86) International application number: PCT/US2007/009070
(87) International publication number: WO 2007/136472

(56) References cited:
- EP-A1- 1 634 908
- EP-A2- 0 326 939
- WO-A-2005/014157
- US-A- 4 076 935
- US-A- 4 650 863
- US-A- 5 055 207

## Description

This application claims the benefit of U.S. Provisional Application 60/801,558, filed May 18, 2006.

The present invention relates to the use of screens comprising at least two layers of different mesh or pore size in a method of preparing cellulose powder as well as to said method, wherein grinding of the cellulose pulp and sieving of the obtained particles can be carried out on-line.

Cellulose in the form of fine particles is used in a variety of applications, for example for the manufacture of cellulose ethers. For the preparation of said cellulose particles generally dry cellulose pulp is supplied in the form of sheets, rolls or bales, which are fed into the intake of a cellulose grinder to be ground into cellulose powder. In many cases the grinders are cutting mills, for example, knife mills. The grinders usually have a screen or sieve in the outlet to control the particle size of the obtained product. In many cases a fine particle size is desirable to meet product performance properties or for efficient further processing, for example derivatisation of cellulose. For obtaining a fine particle size either several steps of grinding and/or several steps of sieving can be carried out, or fine screens can be used immediately after the first grinding step, however, such fine screens have a much larger tendency to break than coarse screens. Therefore obtaining a fine powdered cellulose immediately after grinding of cellulose rolls, sheets or bales can be difficult or impossible because of the easy breakage of those screens having a fine mesh size.

Conventionally woven screens of metal wires are used in powder preparing processes and allow reliable operation for screen sizes over 250 µm. Below that size a technology may be applied wherein the screens are fixed on their support under tension, resulting in an increased screen lifetime. However, screens having a mesh size below 210 µm still show an unacceptably frequent screen break, even with this mounting technique.

EP-A-326 939 provides a method for separating and cleaning cellulose ethers from a suspension by filtration using a web of metal wires having several layers, wherein the different layers have wires of different thickness and providing different mesh size. After filtration the cellulose ether particles are recovered from the web.

One commercially available sintered screen type comprising two different layers of metal wire webs is provided by Spörl KG (Sigmaringendorf, Germany) under the name "TOPMESH". These products are offered as webs for filtration which means that a filter cake is formed on the filter mesh web resulting in separating undesired substances from the recovered filter cake.

The object of the present invention was to provide an improved method for the preparation of cellulose powder which provides easy handling and high output of cellulose powder with desired particle size.

### Summary of the Invention

This object is met by use of a screen comprising at least two layers having different mesh or pore size, wherein the mesh or pore size ratio of at least two layers is from 1.05 : 1 to 30 : 1 and said at least two layers are inseparable from each other over the whole area, in a process of preparing cellulose powder, wherein the screen has at least one screening layer and at least one supporting layer providing mechanical stability to the screening layer, wherein the mesh or pore size of the screening layer is less than 250 µm, and wherein the cellulose is sieved in dry state.

This object is also met by a method for manufacture of cellulose powder having defined maximum particle size comprising the steps of
a. grinding cellulose pulp,
b. separating particles having the desired maximum particle size or a smaller size by means of a screen comprising at least two layers having different pore or mesh size, wherein the mesh or pore size ratio of at least two layers is from 1.05 : 1 to 30 : 1 and said at least two layers are inseparable from each other over the whole area, and
c. further grinding the remaining particles not passing the screen until the whole pulp material has the desired maximum particle size, wherein the screen has at least one screening layer and at least one supporting layer providing mechanical stability to the screening layer, wherein the particle size of the cellulose powder is less than 250 µm, and wherein the cellulose is sieved in dry state.

The present invention further relates to a method for the preparation of cellulose derivatives, which comprises the steps of
(i) manufacturing cellulose powder having defined maximum particle size comprising the steps of:
   a. grinding cellulose pulp,
   b. separating particles having the desired maximum particle size or a smaller size by means of a screen comprising at least two layers having different pore or mesh size, wherein the mesh or pore size ratio of at least two layers is from 1.05:1 to 30:1 and said at least two layers are inseparable from each other over the whole area, and
   c. further grinding the remaining particles not passing the screen until the whole pulp material has the desired maximum particle size, wherein the screen has at least one screening layer and at least one supporting layer providing mechanical stability to the screening layer, wherein the particle size of the cellulose powder is less than 250 µm, and wherein the cellulose is sieved in dry state, and and
(ii) contacting the cellulose powder of step (i) with one or more derivatizing agents to produce a cellulose derivative.

### Detailed Description of the Invention

The layers can be any material providing openings with defined size, however, a woven web, for example, a metal wire web or similar webs providing defined mesh or pore sizes are preferred. Such woven webs for example from metal wire can be used as sieves to select particle sizes passing the meshes or pores of the web. The metal wires are preferably made of a corrosion-resistant material, such as stainless steel.

In a more preferred embodiment the pore size of the screening layer is less than 1000 µm, preferably less than 500 µm, more preferred less than 400 µm, particularly preferred less than 250 µm. The pore size of the screening layer indeed depends on the desired particle size of the cellulose powder used in any further processing. With a screen according to the present invention it is possible to employ screens with a pore or a mesh size of less than 210 µm without unacceptably frequent screen breaks during powdering process.

The second layer as well can be a woven web, like for example a metal wire woven web, wherein the pore or mesh size of said woven web is larger or coarser than the mesh or pore size of the screening layer. The mesh size of the supporting layer is preferably in the range of from 250 to 5000 µm, more preferably from 300 to 4000 µm, most preferably from 500 to 3000 µm. The supporting layer is preferably prepared from a metal mesh wherein the wires have a thickness of from 0.2 to 0.6 mm, preferably from 0.3 to 0.5 mm.

The mesh or pore size ratio of the screening layer and the supporting layer is in the range of 1.05 to 30, preferably in the range of 2 to 20, and most preferred in the range of 4 to 10. For example, if the cellulose finest determining sieve has a mesh size of 150 µm, then the supporting layer would have a most preferred mesh size in the range from 600 µm to 1500 µm. If the support screen has too large mesh size there is a tendency to frequent sieve breakage (formation of holes in the screen), whereupon sieves with small mesh size acting as a support layer limit the open screen area and thus the throughput of the cellulose grinder.

This arrangement of two layers having different pore or mesh size provides a screen fine enough for preparing a powder of desired particle size, wherein the fine screen is responsible for the particle size separation, but has itself not enough mechanical stability for operating without breaking for several days, said fine screen is supported by a coarser screen with stronger wires providing enough mechanical stability. By this arrangement the lifetime of the screen in a process of powdering cellulose can be considerably increased, for example to more than two weeks.

In one preferred embodiment the screen to be used in the process for preparing cellulose powder comprises at least two layers of metal wire cloth. Both sieves are inseparable from each other over the whole area, for example by linking some or all points of contact, for example, by a sintering process. The term "are inseparable from each other over the whole area" as used herein means that some or all points of contact of said at least two layers are linked by forces other than gravity or mechanical pressure and that said at least two layers remain in contact even in the absence of gravity or mechanical pressure. For example, if two layers of the screen can only be separated by a force which does not leave the layers intact, the layers are herein defined as being "inseparable from each other".

One particularly preferred type of screen is a sintered screen type which is available on the market by Spörl KG Prazisionsdrahtweberei, Sigmaringendorf, Germany, sold under the trade name "TOPMESH", provided the mesh sizes are adapted to meet the required mesh or pore size ratio. However, each type of sieve or web fulfilling the features described in the present invention used in a process of preparing a cellulose powder should be considered as falling under the definition of the present claims.

The mesh or pore size for example of a metal wire square web is defined by the distance (space) of two adjacent wires, respectively. This might be determined by measuring the distance between the middle of two adjacent squares (formed from the wires) minus the thickness of the wire dividing said squares. (Stieß, mechanische Verfahrenstechnik, Springer Verlag, 1995)

By the present invention a method for manufacture of cellulose powder having a defined maximum particle size is provided which comprises the steps of
a. grinding cellulose pulp,
b. separating particles having the desired maximum particle size or a smaller size by means of a screen comprising at least two layers having different pore or mesh size, wherein the mesh or pore size ratio of at least two layers is from 1.05 : 1 to 30 : 1 and said at least two layers are inseparable from each other over the whole area, and
c. further grinding the remaining particles not passing the screen until the whole pulp material has the desired maximum particle size, wherein the screen has at least one screening layer and at least one supporting layer providing mechanical stability to the screening layer, wherein the particle size of the cellulose powder is less than 250 µm, and wherein the cellulose is sieved in dry state.

Preferably the grinding according to step a) is carried out in a commonly used cellulose grinder, which might be a table roller mill or a cutting mill, for example, a knife mill. Said grinding usually is carried out in dry state wherein cellulose pulp is supplied in the form of rolls or sheets, which are unwound, if necessary, and fed into the cellulose grinder to be ground into cellulose powder.

Step b) of separating particles having the desired particle size or less can be carried out "on-line", immediately after grinding of the cellulose pulp. The desirable particle size of the cellulose depends on the further process and can be defined by selection of a corresponding screen (sieve) having a corresponding mesh or pore size. The maximum particle size of the cellulose powder generally is up to 500 µm, preferably up to 210 µm, more preferably up to 150 µm, most preferably up to 60 µm. As stated above the mesh or pore size of the layer of the sieve or screen for selecting the particle size of the resulting cellulose powder is smaller than the mesh or pore size of the supporting layer.

According to step c) the particles not passing the screen defining the desired particle size are further ground. In an on-line process the remaining particles do not leave the grinder but remain in the grinder until the whole material has the desired maximum particle size and can pass the screen (sieve).

By use of the screen having at least two layers with different mesh or pore size, wherein the mesh or pore size ratio of at least two layers is from 1.05 : 1 to 30 : 1 and these two layers are inseparable from each other over the whole area, the frequency of a screen break can be considerably decreased. The combination of a fine and a coarse screen layer with the above-defined mesh or pore size ratio can be considered as the key for the longer lifetime and the effect can be further increased by connecting both layers, the coarse and the fine screen layer to each other by an intense fusing process, which basically "welds" the fine screen on the matrix of the coarser support, for example, by the sintering process.

The longer screen lifetime without breakage results in less repair and less changing operations of the screens. Further, even through small breakage points particles can pass not fulfilling the requirements according to desired particle size. By avoiding such small point breakages the production of waste products can be considerably decreased, even for screens having mesh or pore sizes of less than 210 µm. This allows to grind cellulose to very fine (less than 210 µm) particles, which results in new product properties, for example, increased flowing characteristics, increased reactivity of cellulose, higher bulk densities of derivatives of cellulose, improved dissolution characteristics and clarity of cellulose derivatives. Since the cellulose provides increased flowing properties, loading of a reactor for derivatisation of the cellulose can be increased and it can be made good use of the reactor capacity.

Particle size of the ground cellulose can be determined by any known method, for example on Alpine air jet sieves (Alpine (Hosokawa-Alpine), Augsburg, Germany). The analysis is carried out with one sieve per sample. Before starting the analysis the weight of the empty sieve is determined. Thereafter the sieve is positioned on top of the air jet sieve. 20,0 g of a sample are spread over the whole area of the sieve and process of sieving is carried out for 6 min. Vacuum under the sieve is 300 mm aqueous column sub-pressure (2941 Pa). After termination of the sieving process the sieve comprising remaining sample is weighted again.

As described above, in the present invention a screen is used which comprises at least two layers having different mesh or pore size, wherein the mesh or pore size ratio of at least two layers is from 1.05 : 1 to 30 : 1 and these two layers are inseparable from each other over the whole area. A screen can be used which has more than two layers. For example, the screen may comprise the above-described two layers and one or more additional layers which are separable from the above-described two layers. However, this arrangement is not preferred. According to a preferred embodiment of the invention a screen is used which comprises two to three layers which have different mesh or pore size and which are inseparable from each other over the whole area. In the case of a three-layered screen the mesh or pore size ratio of two adjacent layers or of the first and the third layer is from 1.05 : 1 to 30 : 1, preferably in the range of 2 to 20, and most preferred in the range of 4 to 10. Most preferably, the mesh or pore size ratio between the first and the second layer as well as the mesh or pore size ratio between the second and the third layer is from 1.05 : 1 to 30 : 1, preferably from 2 to 20, and most preferred from 4 to 10.

The cellulose powder prepared by a method according to the invention preferably can be used for preparation of high quality cellulose derivatives. Methods for derivatisation of cellulose are known by skilled artisans and are described, for example, in US patents 4,410,693; 4,456,751 and 4,650,863, such methods in connection with the properties and possible uses of the derivatives for example, in Ullmann's Encyclopedia of Industrial Chemistry, 5th Edition (1986), Volume A5, Page 461-488, VCH Verlagsgesellschaft, Weinheim or in Methoden der organischen Chemie, 4.Auflage (1987), Band E20, Makromolekulare Stoffe, Teilband 3, Seite 2048-2076, Georg Thieme Verlag Stuttgart or by R.Dönges, Developments in preparation methods and possible uses of cellulose ethers in Das Papier, 12 (1997), 653-660, Ed. Verein Zellcheming, Darmstadt. The obtained cellulose derivatives might correspond to such described in GB-A 2 262 527 and can further be treated according to their teaching.

Preferred cellulose derivatives are cellulose esters and cellulose ethers, particularly ethylcellulose, methylcellulose, hydroxyethyl cellulose, hydroxypropyl cellulose, hydroxyethylmethyl cellulose, hydroxypropylmethyl cellulose, ethylhydroxyethyl cellulose, carboxymethyl cellulose, and carboxymethyl hydroxyethylcellulose.

Preferably said derivatives are cellulose ethers and esters and are prepared by a method comprising the steps of
(i) providing cellulose powder by a method as described above and
(ii) reaction of the cellulose powder of step (i) with one or more etherification agents and/or esterification agents to obtain cellulose ether(s) or ester(s).

Reaction of the cellulose powder preferably involves the use of any etherification agents or esterification agents like alkylating agents, for example chloromethane, bromomethane, chloroethane, bromoethane or the like, or hydroxylation agents, for example ethylene oxide, propylene oxide or the like.

Preferably the cellulose powder is activated in a known manner before step (ii) by use of alkaline material. Said activation can be carried out for example by treatment of the cellulose with NaOH.

The present invention is further illustrated by the following examples which are not to be construed to limit the scope of the invention.

### Examples

### Comparative Experiment 1:

A pulp grinder on production scale is fitted with a known monolayer screen made of a stainless steel with a mesh size of 180 µm in order to get very fine cellulose powder from the rolls of wood pulp cellulose (spruce). The breakage of the screen is observed after a very short time (2 hours).

### Experiment 2:

The same pulp grinder as in Example 1 is equipped with a two layered screen made of a stainless steel sintered over the whole area. The screen is sold by Spörl KG Präzisionsdrahtweberei, Germany under the trade name "TOPMESH". The mesh size of the screening layer is 150 µm. The mesh size of the supporting layer is 630 µm. The thickness of the mesh wires of the supporting layer is 0.4 mm. The grinder is operated over the entire test run of 18 days without screen breakage.

### Experiment 3:

The same pulp grinder as in Example 1 is equipped with a known monolayer screen of 315 µm made of a stainless steel and rolls of wood pulp cellulose (spruce) is ground continuously. The screen breaks after 3 weeks of operation and has to be replaced by a new one.

## Claims

1. Use of a screen comprising at least two layers having different mesh or pore size, wherein the mesh or pore size ratio of at least two layers is from 1.05 : 1 to 30 : 1 and said at least two layers are inseparable from each other over the whole area, in a process of preparing cellulose powder, wherein the screen has at least one screening layer and at least one supporting layer providing mechanical stability to the screening layer, wherein the mesh or pore size of the screening layer is less than 250 *µ*m, and wherein the cellulose is sieved in dry state.

2. Use according to claim 1, wherein the supporting layer has a coarser mesh or pore size than the screening layer.

3. Use according to claims 1 or 2, wherein at least the screening layer is sintered to the supporting layer.

4. A method for manufacture of cellulose powder having defined maximum particle size comprising the steps of
a. grinding cellulose pulp,
b. separating particles having the desired maximum particle size or a smaller size by means of a screen comprising at least two layers having different pore or mesh size, wherein the mesh or pore size ratio of at least two layers is from 1.05 : 1 to 30 : 1 and said at least two layers are inseparable from each other over the whole area, and
c. further grinding the remaining particles not passing the screen until the whole pulp material has the desired maximum particle size , wherein the screen has at least one screening layer and at least one supporting layer providing mechanical stability to the screening layer, wherein the particle size of the cellulose powder is less than 250 *µ*m, and wherein the cellulose is sieved in dry state.

5. The method according to claim 4, wherein the layer providing stability to the screening layer has a coarser mesh or pore size than the screening layer.

6. The method according to claims 4 or 5, wherein at least the screening layer is sintered to the supporting layer.

7. A method for preparation of cellulose derivatives, comprising the steps of
(i) manufacturing cellulose powder having defined maximum particle size comprising the steps of
a. grinding cellulose pulp,
b. separating particles having the desired maximum particle size or a smaller size by means of a screen comprising at least two layers having different pore or mesh size, wherein the mesh or pore size ratio of at least two layers is from 1.05 : 1 to 30 : 1 and said at least two layers are inseparable from each other over the whole area, and
c. further grinding the remaining particles not passing the screen until the whole pulp material has the desired maximum particle size, wherein the screen has at least one screening layer and at least one supporting layer providing mechanical stability to the screening layer, wherein the particle size of the cellulose powder is less than 250 *µ*m, and wherein the cellulose is sieved in dry state, and
(ii) contacting the cellulose powder of step (i) with one or more derivatizing agents to produce a cellulose derivative.

8. The method of claim 7 wherein the cellulose derivative is a cellulose ether or cellulose ester.

## Patentansprüche

1. Verwendung eines Siebs aufweisend wenigstens zwei Schichten mit unterschiedlicher Maschen- oder Porengröße, wobei das Maschen- oder Porengrößenverhältnis wenigstens zweier Schichten 1,05:1 bis 30:1 beträgt und diese wenigstens zwei Schichten im gesamten Bereich nicht voneinander trennbar sind, in einem Verfahren zur Herstellung von Cellulosepulver, wobei das Sieb wenigstens eine Siebschicht und wenigstens eine Trägerschicht aufweist, die der Siebschicht mechanische Stabilität verleiht, wobei die Maschen- oder Porengröße der Siebschicht kleiner als 250 µm ist und wobei die Cellulose im trockenen Zustand gesiebt wird.

2. Verwendung nach Anspruch 1, wobei die Trägerschicht eine größere Maschen- oder Porengröße aufweist als die Siebschicht.

3. Verwendung gemäß Anspruch 1 oder 2, wobei zumindest die Siebschicht auf die Trägerschicht gesintert ist.

4. Verfahren zur Herstellung eines Cellulosepulvers mit einer definierten maximalen Teilchengröße, umfassend die Schritte:
a) Mahlen von Zellstoff,
b) Abtrennen der Teilchen mit der gewünschten maximalen Teilchengröße oder einer kleineren Größe mittels eines Siebs, das wenigstens zwei Schichten mit unterschiedlicher Poren- oder Maschengröße aufweist, wobei das Maschen- oder Porengrößenverhältnis wenigstens zweier Schichten 1,05:1 bis 30:1 beträgt und diese wenigstens zwei Schichten im gesamten Bereich nicht voneinander trennbar sind, und
c) weiteres Mahlen der verbleibenden Teilchen, die nicht durch das Sieb passieren, bis der gesamte Zellstoff die gewünschte maximale Teilchengröße aufweist, wobei das Sieb wenigstens eine Siebschicht und wenigstens eine Trägerschicht aufweist, die der Siebschicht mechanische Stabilität verleiht, wobei die Teilchengröße des Cellulosepulvers weniger als 250 µm beträgt und wobei die Cellulose im trockenen Zustand gesiebt wird.

5. Verfahren nach Anspruch 4, wobei die Schicht, die der Siebschicht Stabilität verleiht, eine größere Maschen- oder Porengröße als die Siebschicht aufweist.

6. Verfahren gemäß Anspruch 4 oder 5, wobei zumindest die Siebschicht auf die Trägerschicht gesintert ist.

7. Verfahren zur Herstellung von Cellulosederivaten, umfassend die Schritte:
(i) Herstellen eines Cellulosepulvers mit definierter maximaler Teilchengröße, umfassend die Schritte:
a) Mahlen von Zellstoff,
b) Abtrennen der Teilchen mit der gewünschten maximalen Teilchengröße oder einer kleineren Größe mittels eines Siebs, das wenigstens zwei Schichten mit unterschiedlicher Poren- oder Maschengröße aufweist, wobei das Maschen- oder Porengrößenverhältnis wenigstens zweier Schichten 1,05:1 bis 30:1 beträgt und diese wenigstens zwei Schichten im gesamten Bereich nicht voneinander trennbar sind, und
c) weiteres Mahlen der verbleibenden Teilchen, die nicht durch das Sieb passieren, bis der gesamte Zellstoff die gewünschte maximale Teilchengröße aufweist, wobei das Sieb wenigstens eine Siebschicht und wenigstens eine Trägerschicht aufweist, die der Siebschicht mechanische Stabilität verleiht, wobei die Teilchengröße des Cellulosepulvers weniger als 250 µm beträgt und wobei die Cellulose im trockenen Zustand gesiebt wird, und
(ii) In-Kontakt-Bringen des Cellulosepulvers aus Schritt (i) mit einem oder mehreren derivatisierenden Mitteln, um ein Cellulosederivat herzustellen.

8. Verfahren nach Anspruch 7, wobei das Cellulosederivat ein Celluloseether oder Celluloseester ist.

## Revendications

1. Utilisation d'un tamis comprenant au moins deux couches ayant une ouverture de maille ou taille de pore différente, le rapport des ouvertures de maille ou tailles de pore d'au moins deux couches allant de 1,05/1 à 30/1 et lesdites au moins deux couches étant inséparables l'une de l'autre sur l'ensemble de la surface, dans un procédé de préparation de poudre de cellulose, où le tamis a au moins une couche de tamisage et au moins une couche de support procurant une stabilité mécanique à la couche de tamisage, où l'ouverture de maille ou taille de pore de la couche de tamisage est inférieure à 250 *µ*m, et où la cellulose est criblée à l'état sec.

2. Utilisation selon la revendication 1, où la couche de support a une ouverture de maille ou taille de pore plus grosse que la couche de tamisage.

3. Utilisation selon les revendications 1 ou 2, où au moins la couche de tamisage est frittée sur la couche de support.

4. Une méthode pour la fabrication de poudre de cellulose ayant une taille de particule maximale définie comprenant les étapes consistant
a. à moudre de la pâte de cellulose,
b. à séparer des particules ayant la taille de particule maximale désirée ou une taille plus petite au moyen d'un tamis comprenant au moins deux couches ayant une taille de pore ou ouverture de maille différente, le rapport des ouvertures de maille ou tailles de pore d'au moins deux couches allant de 1,05/1 à 30/1 et lesdites au moins deux couches étant inséparables l'une de l'autre sur l'ensemble de la surface, et
c. à moudre plus avant les particules restantes ne passant pas au travers du tamis jusqu'à ce que l'ensemble de la matière formant pâte ait la taille de particule maximale désirée, où le tamis a au moins une couche de tamisage et au moins une couche de support procurant une stabilité mécanique à la couche de tamisage, où la taille de particule de la poudre de cellulose est inférieure à 250 *µ*m, et où la cellulose est criblée à l'état sec.

5. La méthode selon la revendication 4, où la couche procurant une stabilité à la couche de tamisage a une ouverture de maille ou taille de pore plus grosse que la couche de tamisage.

6. La méthode selon les revendications 4 ou 5, où au moins la couche de tamisage est frittée sur la couche de support.

7. Une méthode pour la préparation de dérivés de la cellulose, comprenant les étapes consistant
(i) à fabriquer de la poudre de cellulose ayant une taille de particule maximale définie comprenant les étapes consistant
a. à moudre de la pâte de cellulose,
b. à séparer des particules ayant la taille de particule maximale désirée ou une taille plus petite au moyen d'un tamis comprenant au moins deux couches ayant une taille de pore ou ouverture de maille différente, le rapport des ouvertures de maille ou tailles de pore d'au moins deux couches allant de 1,05/1 à 30/1 et lesdites au moins deux couches étant inséparables l'une de l'autre sur l'ensemble de la surface, et
c. à moudre plus avant les particules restantes ne passant pas au travers du tamis jusqu'à ce que l'ensemble de la matière formant pâte ait la taille de particule maximale désirée, où le tamis a au moins une couche de tamisage et au moins une couche de support procurant une stabilité mécanique à la couche de tamisage, où la taille de particule de la poudre de cellulose est inférieure à 250 *µ*m, et où la cellulose est criblée à l'état sec, et
(ii) à mettre la poudre de cellulose de l'étape (i) en contact avec un ou plusieurs agents de formation de dérivés afin de produire un dérivé de la cellulose.

8. La méthode de la revendication 7 où le dérivé de la cellulose est un éther de cellulose ou un ester de cellulose.
